# EUROPEAN PATENT APPLICATION

(11) **EP 3 026 648 A1**
(43) Date of publication of application: **01.06.2016**
(21) Application number: 14306913.6
(22) Date of filing: 27.11.2014
(51) Int. Cl.: G08C 17/02, H04L 12/28

(54) **Method of remote configuration and corresponding apparatus**

(71) Applicant: Thomson Licensing, 92130 Issy-les-Moulineaux (FR)
(72) Inventor: Eluard, Marc, 35576 Cesson-Sévigné (FR); Maetz, Yves, 35576 Cesson-Sévigné (FR)
(74) Representative: Huchet, Anne

(57) **Abstract**

A first device, e.g. a smartphone, configures a second device, e.g. a display device, according to user preferences stored in the first device. The configuration of the second device is adjusted according to the stored user preferences by transmission of remote control commands from the first device to the second device and measuring physical parameters corresponding to remotely controllable features.

## Description

### 1. Technical field.

The present disclosure generally relates to remote control of devices and more specifically to remote configuring of devices.

### 2. Technical background.

Nowadays, many devices are capable of saving a configuration. A car audio system saves the last chosen settings when it is turned off, such as audio volume, equalizer settings, front/rear left/right speaker fading, last tuned to radio station, etc., so that when the next time it is turned on, it will tune to the last chosen radio station, set the volume to the last chosen volume, and set the equalizer and the fading parameters to the last recorded settings. Cars memorize and recall vehicle settings for several drivers. Such settings include features such as position of the driver's seat, steering wheel, pedal and mirror, but also climate control settings, characteristics related to damping of the suspension, characteristics related to motor performance or automatic gearbox performance. While this is a very convenient feature if drivers with different anatomy and different likes frequently drive a same car, the stored configurations cannot be transferred to another car. Patent application US2013/0197674A1 with primary inventor Lowry describes automatic configuration of self-configurable environments. A portable consumer device communicates a stored collection of configuration settings to the configurable environment which then configures itself. A consumer configures an automobile according to his preferences. If those preferences are stored in the consumer's portable consumer device, then when the consumer enters another car, such as a rental car, configured with the same technology, that car can configure itself to the consumer's preferences. Environment translation software is resident on a portable consumer device and the automobile reports adjustments made to the passenger compartment and the portable consumer device can translate these measurements from one automobile to another.

Among some of the disadvantages of prior art is that it cannot be used in a configurable environment that does not comprise the above described technology or for which no environment translation software is available. For reasons of environment diversity, a setting in one environment may have a different result in terms of user experience than in another environment.

It would therefore be desirable to have a device and method for remote configuration of devices according to user preferences regardless of the environment. There is thus a need for further improvement of prior art solutions.

### 3. Summary.

The present disclosure aims at alleviating some of the inconveniences of prior art.

To this end, the present principles comprise a method of remote configuration, by a first device, of at least one remote controllable feature of a second device according to user preferences, the method comprising receiving, from at least one sensor, at least one value of at least one physical parameter corresponding to a remote controllable feature of the second device. If the at least one value of the at least one physical parameter received from the at least one sensor is not according to at least one user preference value stored in the first device, at least one remote control command is transmitted to the second device for configuring the at least one remote controllable feature of the second device according to the user preferences.

According to a variant embodiment, the method further comprises iterating the steps of the method until the at least one value of the at least one physical parameter is according to the at least one user preference value stored in the first device.

According to a variant embodiment, the method further comprises receiving from the second device a set of remote controllable features and associated remote control commands for adjusting the remote controllable features.

According to a variant embodiment, the method further comprises recording of a value of at least one physical parameter, received from the at least one sensor, in a memory of the first device for storing the at least one user preference value.

According to a variant embodiment, the at least one sensor comprises a microphone, the at least one physical parameter comprises sound, and the at least one remote controllable feature comprises an audio volume level.

According to a variant embodiment, the at least one remote control command transmitted in the transmitting step comprises a remote control command for adjusting the audio volume level.

According to a variant embodiment, the at least one sensor comprises a light sensor, the at least one physical parameter comprises light, and the at least one remote controllable feature comprises a display brightness level.

According to a variant embodiment, the at least one remote control command transmitted in the transmitting step comprises a remote control command for adjusting the display brightness level.

According to a variant embodiment, the at least one sensor comprises a color sensor, the at least one physical parameter comprises color, and the at least one remote controllable feature comprises a display color setting.

According to a variant embodiment, the at least one remote control command transmitted in the transmitting step comprises a remote control command for adjusting the display color setting.

The present disclosure also relates to an apparatus for remote configuring of at least one remote controllable feature of a remote controllable device according to user preferences, the apparatus comprising: a processing unit; at least one sensor, operably coupled to the processing unit, configured to measure at least one value of at least one physical parameter corresponding to a remote controllable feature of the remote controllable device; a memory, operably coupled to the processing unit, configured to store at least one user preference value of the at least one physical parameter; the processing unit being configured to determine that the at least one value of the at least one physical parameter received from the at least one sensor is not according to the at least one user preference value stored in the memory; and a remote control command transmitter configured to transmit at least one remote control command to the remote controllable device for configuring the at least one remote controllable feature of the remote controllable device according to the at least one user preferences.

According to a variant embodiment of the apparatus, the processing unit is further configured to iterate the determining and the transmitting until the value of the at least one physical parameter is according to the at least one user preference value stored in the memory.

According to a variant embodiment of the apparatus, the apparatus further comprises a receiver interface operably configured to receive from the remote controllable device a set of remote controllable features and associated remote control commands for adjusting the remote controllable features.

According to a variant embodiment of the apparatus, the at least one sensor comprises a microphone the at least one physical parameter comprises sound, and the at least one remote controllable feature comprises an audio volume level.

According to a variant embodiment of the apparatus, the at least one sensor comprises a light sensor, the at least one physical parameter comprises light, and the at least one remote controllable feature comprises a display brightness level.

### 4. List of figures.

More advantages of the present principles will appear through the description of particular, non-restricting embodiments of the disclosure. In order to describe the manner in which the advantages of the present principles can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure.

The exemplary embodiments will be described with reference to the following figures:
Figure 1 is a diagram of prior art remote configuring of a self-configuring environment.
Figure 2 illustrates an example embodiment according to the present principles.
Figure 3 illustrates yet another example embodiment according to the present principles.
Figure 4 illustrates a further example environment where the present principles are applicable.
Figure 5 is a sequence chart of an example scenario illustrating aspects of the present principles.
Figure 6 is a sequence chart of an example scenario illustrating further aspects of the present principles.
Figure 7 is a sequence chart of an example scenario that illustrates further aspects of the present principles.
Figure 8 is a further sequence chart of an example scenario that illustrates further aspects of the present principles.
Figure 9 is an example remote control device according to the principles of the present disclosure.
Figure 10 is a flow chart of an advantageous embodiment of a method according to the present principles.
Figure 11 is a flow chart of a further advantageous embodiment of a method according to the present principles.

### 5. Detailed description.

In the absence of a standard for configuring configurable environments, it is difficult to ensure that a configuration of one environment is correctly transported to another environment. For example, an audio volume preference of "10" for a type of audio system of a given brand will not result in a same audible volume with another type or brand of audio system, due to the different physical dimensions and different acoustics of the environment. It can be readily understood that the same is also true for audio volume settings of different audio systems. For an audio system of brand A, a setting of audio volume to "10" may result in an audible volume of 30dB or dBSPL (SPL stands for Sound Pressure Level), whereas for an audio system of brand B used in the same environment, the same setting may result in an audible volume of 53dB. A rear window mirror angle setting in a passenger compartment of a car of make A will not allow a same driver that enters the passenger compartment of a car of make B to correctly view the rear window in the mirror as the dimensions of the passenger compartment of car A and B are different. For television set of different brands a same value for brightness / color setting results in a different observed luminosity / color.

A non-exhaustive list of devices that can be remotely controlled by a remote control device comprises: a television set; a display; a hifi system; a digital set top box or decoder; a lighting, heating or climate control system. Remote control devices can operate in various ways, for example using ultrasound, infrared light or radio waves including NFC, WiFi and Bluetooth. Even smartphones equipped with so-called IR ports can be used as an IR remote control device (IR Blaster). Remote controls have become commonplace in everyday life. Advantageously, the present principles comprise the use of such remote control commands.

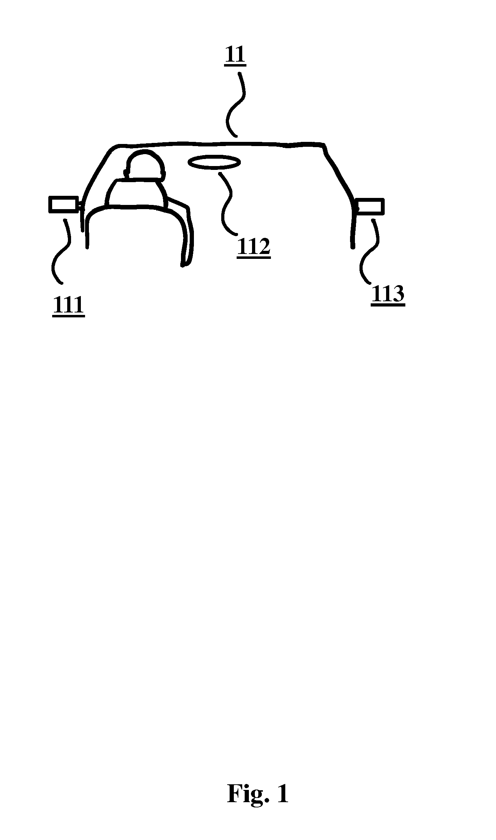

**Figure 1** is a diagram of prior art remote configuring of a self-configuring environment. Depicted are a configurable environment 11, i.e. a car interior with adjustable power mirrors 111, 112 and 113. Configuration settings are stored in portable consumer device. The portable consumer device can communicate the stored configuration settings (here: mirror angles) to the configurable environment which then configures itself according to those configuration settings.

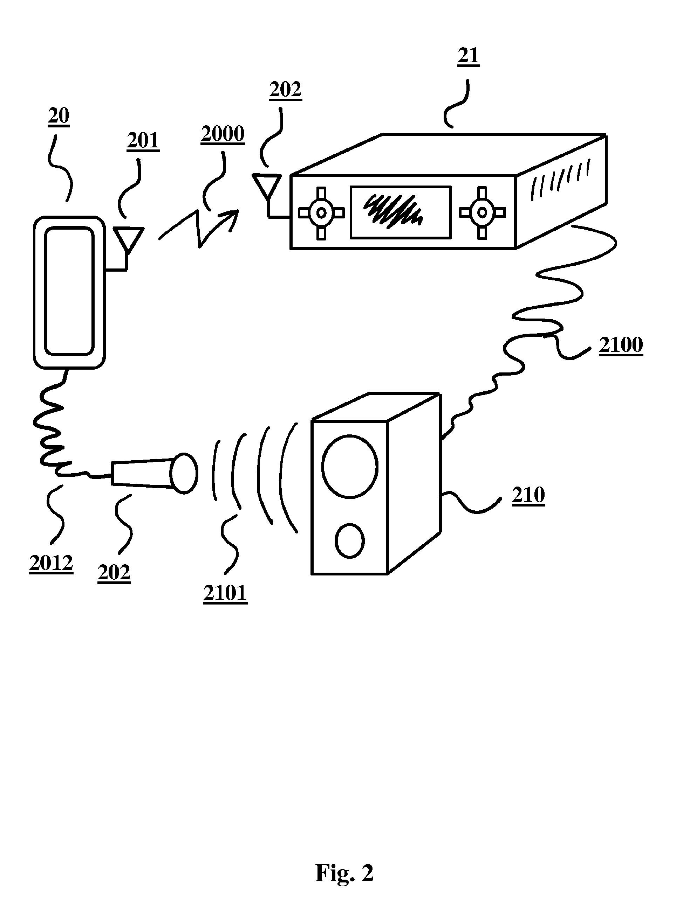

**Figure 2** is an example embodiment according to the present principles. It comprises a remote control device or 'first device' (e.g. smartphone 20) and a remote controllable device or 'second device' (e.g. audio system 21). A Bluetooth wireless communication link 2000 between the devices is established by means of antennas (201 and 202). The remote control device is further associated with a sensor (microphone 202, connected via connection 2012). The sensor is capable of measuring a value of at least one physical parameter that corresponds to a remote controllable feature of the remote controllable device (example remote controllable features are audio volume level, bass/treble level). The remote controllable device is further associated with a peripheral device (loud speaker 210, via connection 2100) that produces sound waves (2101). The remote control of the remote controllable device, the emission of sound waves by the remote controllable device and the reception of the sound waves by the remote control device forms a feedback loop between the remote control device and the remote controllable device.

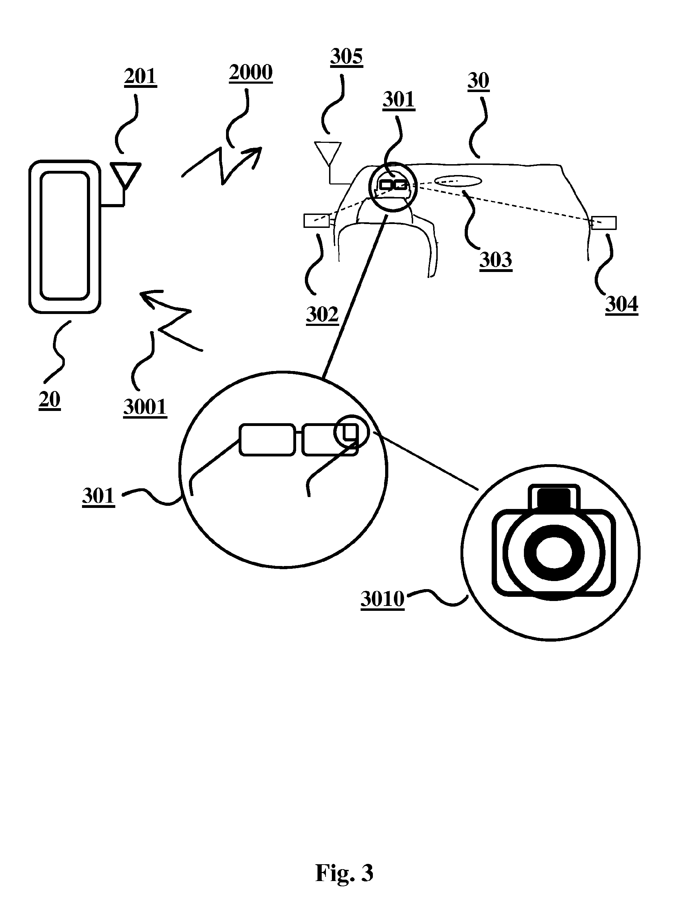

**Figure 3** illustrates yet another example embodiment according to the present principles. A remote controllable device (car's passenger compartment 30) comprises power mirrors (302, 303 and 304). The remote controllable device is equipped with means for communication (antenna 305, coupled to an RF (Radio Frequency) interface) with the remote control device 20. The driver wears glasses (301), that comprise a sensor that is associated with the remote control device (camera 3010; glasses 301 are for example Google Glass™) and means for communicating with the remote control device (e.g. an RF transmitter/receiver and corresponding embedded antenna) via wireless communication channel 3001. A feature (the angular orientation of the power mirrors) of the remote controllable device is adjusted according to the previous described principles; each of the power mirrors is configured according to the driver's preferences stored in the remote control device by looking into the particular mirror until it is adjusted accordingly. Thus, the driver wearing these glasses and having the remote control device according to the present principles has merely to take place in a car equipped with remote controllable power mirrors and look for a few moments into each mirror for the mirror angle being automatically adapted to his or her preferences.

According to a further variant embodiment of the present principles, the glasses comprise the remote control device thereby removing the need for a smartphone.

Non-exhaustive examples of remote controllable devices that can be used according to the present principles are:
• A television set, of which remote controllable features such as brightness level, contrast level, color level, color saturation level, sound level, equalizer level, and tuned channel can be remotely controlled according to user preferences. In this case, the remote control device according to the present principles can be associated to a plurality of sensors such as a camera for measuring picture settings, an ambient light sensor for measuring ambient light and adjust display brightness, a microphone for measuring audio settings and adjust sound level, an acceleration sensor (for measuring gestures and translate these in remote control commands);
• A display, of which not only previous mentioned features such as brightness level, contrast and color level can be remotely controlled but also features such as screen refresh rate and resolution level;
• A personal computer, of which not only features such as the above mentioned display features can be remotely controlled, but also features such as text/graphics zoom level, and windows theme settings.

Non-exhaustive examples of physical parameters that can be influenced by the remote controllable device and that can be measured by at least one sensor are:

| **Physical parameter** | **Remote controllable feature** | **Sensor type** |
|---|---|---|
| Brightness | Luminosity level | Light sensor, camera |
| Contrast | Contrast level | Light sensor, camera |
| Color | Colorimetry | Color sensor, camera |
| Acceleration | Zapping, volume level,.. | Accelerometer |
| Distance | Distance | (IR) radar, stereo camera |
| Inclination | Seat, mirror angle | Tilt sensor |
| Sound | Volume level, equalizer | Microphone |
| Temperature | Heating | Temperature sensor |

Non-exhaustive examples of remote control devices are: a smartphone, a smartwatch, an electronic key, or a dedicated device.

Non-exhaustive examples of communication means that can be used to transmit remote control commands to from the remote control device to the remote controllable device are: light or radio frequency based such as Infrared, Bluetooth, and Near Field Communication.

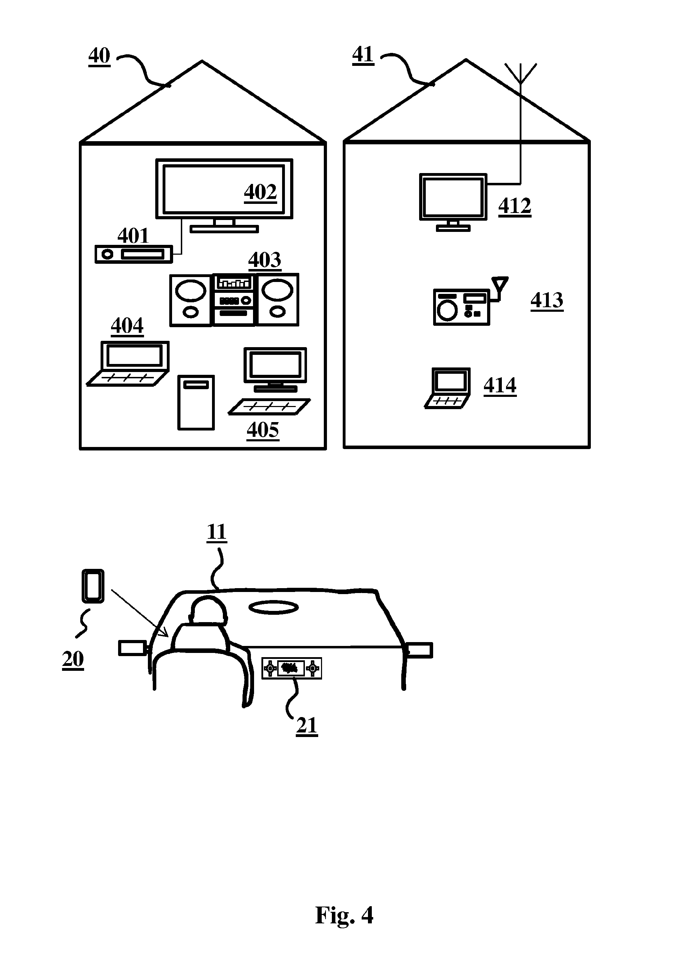

**Figure 4** is a further example of a heterogeneous environment where the present principles are applicable. Illustrated is a first (home) environment (40) that comprises different remote controllable devices: a digital set top box (401), a digital television set (402), a hifi set (403), a laptop computer (404) and a desktop computer (405). Illustrated is further a second (home) environment (41) comprising a television set (412), a portable radio (413), and a notebook computer (414). Finally, a user in a third (car) environment (11), has a remote control device (20) and a car radio (21). According to the present principles, the user can have the audio level of the hifi set automatically set to the preference level stored in the remote control device, enter the living room where the audio level of the digital television is automatically set to the same preferred level, start working on his desktop or on his laptop pc while listening to music provided by these devices on the preferred level. A similar example can be given for a brightness or color setting level preference applicable to display devices (e.g. 402, 404, 405). A link can also be made to the previously cited example of the car environment: when a user is listening to his car radio which he has set to a given audio level which is stored as a preference in his remote control device, he can leave his car and enter the house and have the audio level of any audio producing and remote controllable device in the house set automatically to the same preferred audio level. Likewise, the present principles can be advantageously used when a user wants his preferences to be applied to devices another environment such as the TV set, the portable radio or the notebook in the second home.

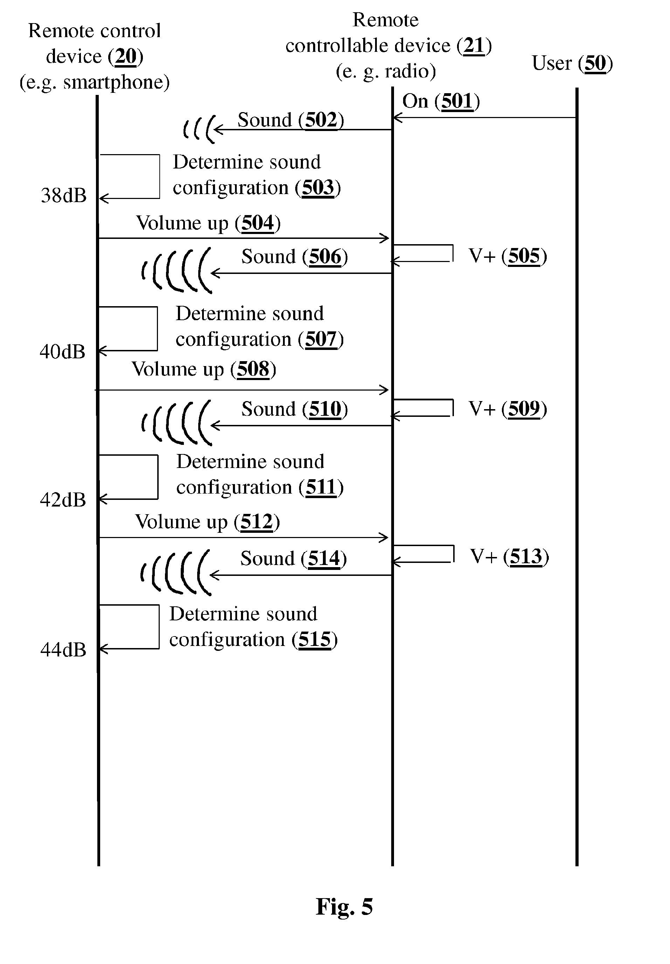

**Figure 5** is a sequence chart of an example scenario that illustrates aspects of the present principles. The vertical lines represent, from left to right, the remote control device (20; e.g. smartphone), the remote controllable device (21; e.g. radio) and a user (50). For easy comprehension, the remote control device is herein referred to as smartphone, and the remote controllable device is hereinafter referred to as radio. The communication exchanges between the devices and the user are represented horizontally. The sequence starts with the user switching on the radio (501), which results in the radio producing sound (502) e.g. via loudspeaker 210. The smartphone captures the sound via a sensor associated with the smartphone (e.g. microphone 202 of fig.2) and measures therefrom (503) a value of sound level (here, 38dB). The smartphone compares the value with a preference value that is stored in the smartphone (here, the preference value is 44dB). As the value is not according to the preference (38dB < 44dB), the smartphone transmits a remote control command 'volume up' (504) to the radio to adjust the audio output level of the radio. The radio receives the command and increases the audio volume (V+ 505). The sound produced by the radio (506) is again captured by the smartphone and the sound is again measured (507). As the determined value is still under the preference value (40dB < 44 dB), another remote control command 'volume up' (508) is transmitted to the radio, and the radio increases (509) the volume. The sound produced (510) is captured and measured by the smartphone which determines (511) that the sound value is still not according to the preference value (42dB < 44dB). Again, the smartphone sends (512) a 'volume up' remote control command to the radio. The radio increases the audio volume (513) and the sound produced (514) is captured by the smartphone which determines (515) that the new sound value is now according to the preference value (44dB) and the configuration/adjustment of the remote controllable device ends.

It can thus be observed that the steps of the method are iterated until it is determined that the at least one feature (here, the audio volume level) of the remote controllable device (e.g. radio) is according to the at least one preference value (e.g. 44dB) stored in the remote control device (e.g. smartphone). Advantageously, according to the present principles, remote control commands that are transmitted from the remote control device to the remote controllable device are "standard" remote control commands, such as the described "volume up" or "volume down" commands. This way, the present principles can be used with any remote controllable device and implementation of the present principles does not require specific soft- or hardware in the remote controllable device. The remote controllable device does not need to be self-configurable as according to the present principles the remote controllable device does not configure itself but is configured by the remote control device. When transporting the preference settings from one environment to another, there is no need for translation software as the features remote controllable devices are adjusted according to the preference settings based on measurements obtained from one or more sensors associated with the remote control device.

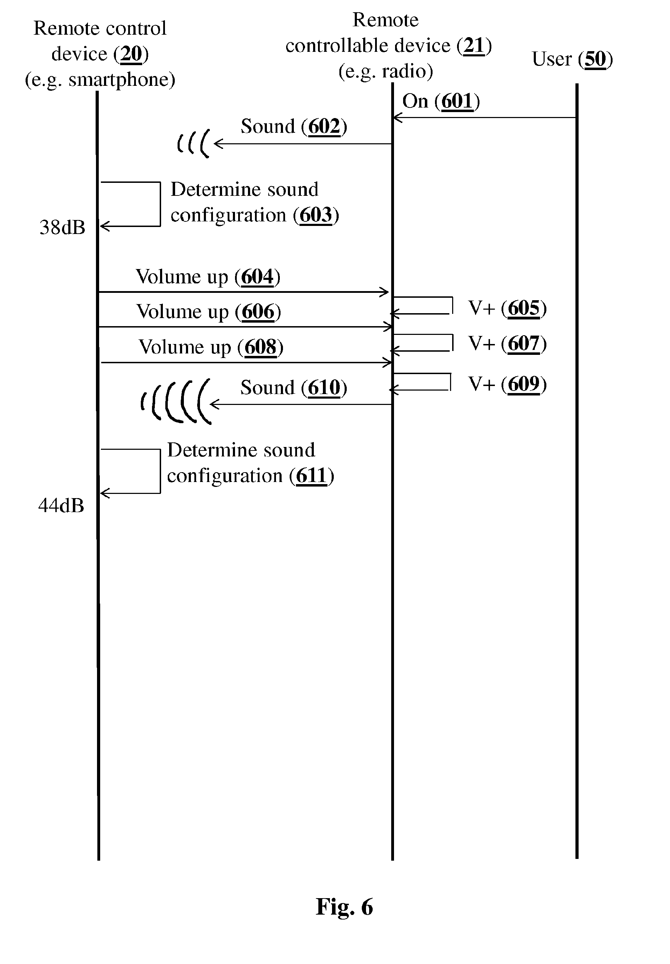

**Figure 6** is a sequence chart of an example scenario that illustrates a variant embodiment according to the present principles. The sequence starts with the user switching on the radio (601), which results in the radio producing sound (602). The smartphone's sensor captures the sound and determines therefrom (603) the sound value. The smartphone compares the sound value with the preference value that is stored in the smartphone (44dB). In this case, it is way below (38dB << 44 dB). As it is way below the preference, the smartphone transmits a plurality of remote control commands (volume up 604, 606, and 608) to the radio to significantly increase the audio output level of the radio. The radio receives these commands and consequently increases the audio volume (605, 607 and 609). The sound (610) value produced by the remote controllable device is again verified (611) by the remote control device. As the sound value is according to the stored preference value, the configuration setting/adjustment ends.

According to a variant embodiment, rather than transmitting a plurality of remote control commands (e.g. to stepwise increase decrease audio volume of a radio, of a home hifi set, of luminosity of a display, of a previous/next channel of a digital television decoder) a single, specific remote control command is transmitted in order to change significantly a physical parameter corresponding to a remote controllable feature of the remote controllable device. This is best explained with the help of an example. Where a user presses once on the P+ button of the remote control of his DTV, the DTV will change to the next channel. However if the user keeps holding down the P+ button for a determined delay, the remote control command transmits a P+10 remote control command to the DTV.

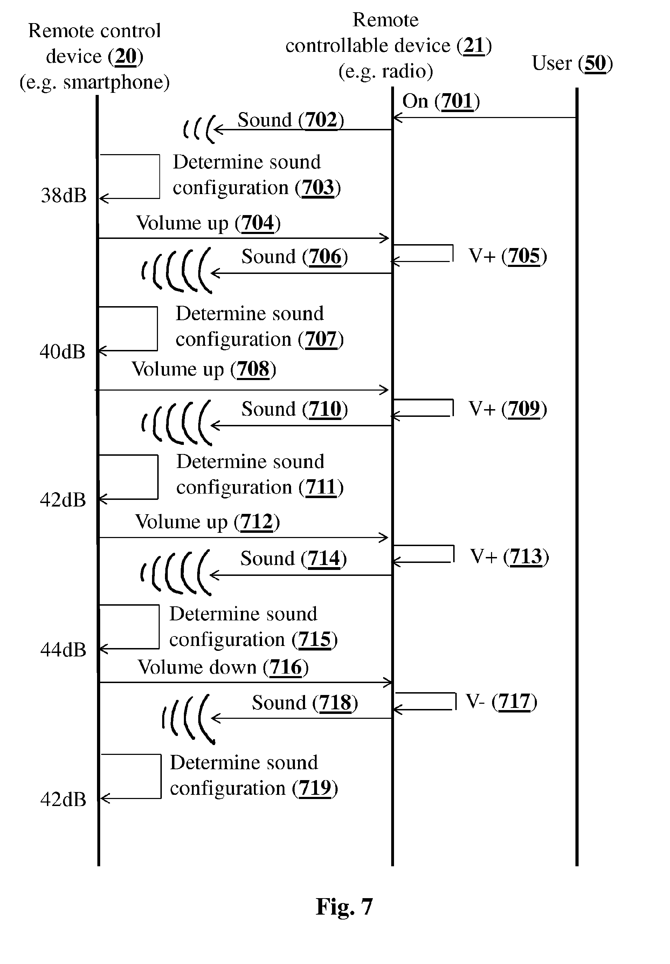

**Figure 7** is a sequence chart of an example scenario that illustrates further aspects of the present principles. According to the scenario of figure 6, the preference setting is 43dB and not 44dB as was the case for figures 4 and 5. The sequence starts with the user switching on the radio (701), which results in the radio producing sound (702). The smartphone captures the sound via a sensor associated with the smartphone and determines therefrom (703) the sound level value as received by the sensor (here, 38dB). The smartphone compares the sound value with a preference value that is stored in the smartphone (here, 43dB). As the sound value is not according to the preference value (38dB < 43dB), the smartphone transmits a remote control command 'volume up' (704) to the radio to adjust the audio output level of the radio. The radio receives the remote control command and increases the audio volume (V+ 705). The sound produced by the radio (706) is again captured by the smartphone and the audio level value is again measured (707). As the determined sound value is still under the preference value (40dB < 43 dB), another remote control command 'volume up' (708) is transmitted to the radio, and the radio increases (709) the volume. The sound produced (710) is captured and measured by the smartphone which determines (711) that the measured value is still under the preference value (42dB < 43dB). Again, the smartphone sends (712) a 'volume up' remote control command to the radio. The radio increases the audio volume (713) and the sound produced (714) is captured by the smartphone which reads (715) the new sound value measured by the sensor (44dB). As the measured value is now above the preference value (44dB > 43 dB), the audio level of the radio is decreased to keep the measured sound value just under the preferred value, by transmission (716) of a volume down remote control command to the radio, which decreases the volume (717). The sound value (718) is again measured by the smartphone (719). According to this variant, the audio volume is set to the next lower possible volume. Of course, the audio volume can also be set to the next higher possible volume. According to a variant embodiment, to set the audio volume to the next lower or next higher possible volume if the volume cannot be adjusted to the exact preference value that is stored in the remote control device as a preference setting for adjustment.

The above example embodiments are shown with a remote controllable device that is powered on at the start. The present principles also apply when the remote controllable device is already powered on when the remote control device comes within remote control range of the remote controllable device.

The above example embodiments illustrate a smartphone as a remote control device and a radio as a remote controllable device. Of course, the present principles are applicable to other device types such as those listed in relation to figure 3.

According to a variant embodiment, the remote control device receives a list from the remote controllable device comprising the features of the remote controllable device that can be adjusted by remote control commands and that comprises the associated remote control command(s) to adjust the feature. This way, the remote control device can advantageously determine the set of features that can be remotely controlled and the associated remote control commands.

According to a variant embodiment, the remote control device can learn remote control commands from a remote control device supplied with the remote controllable device, for example by placing the remote control devices face to face, recording of light pulses and associating them with remote control commands.

According to a variant embodiment, the remote control device can be set to use particular remote control commands by programming it to use the specific set, which is for example selected by entering a remote controllable device code.

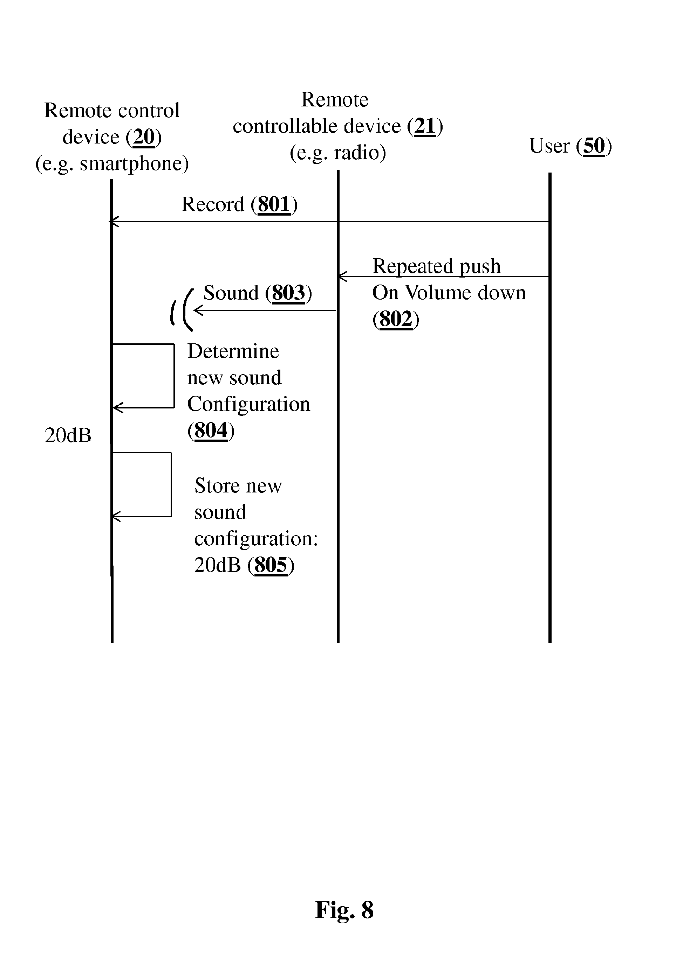

**Figure 8** is a further sequence chart of an example embodiment of some further aspects of the present principles that illustrates the recording of a preference value in the remote control device. The sequence diagram starts with the user activating (801) a preference storage function (record) on the remote control device. Then the user increases the audio volume of the remote controllable device by repeatedly pushing (802) the volume+ button of the remote controllable device (or holding the volume+ button for a while, or turning the volume button). As a result, the level of sound produced by the loudspeaker is increased (803). The remote control device receives (804) from the sensor the value of the physical parameter (20dB of sound) and stores it (805) as the new preference value for audio volume, e.g. when it is determined that during a determined time the value of the physical parameter remains unchanged. The determined time is for example 1-3 seconds.

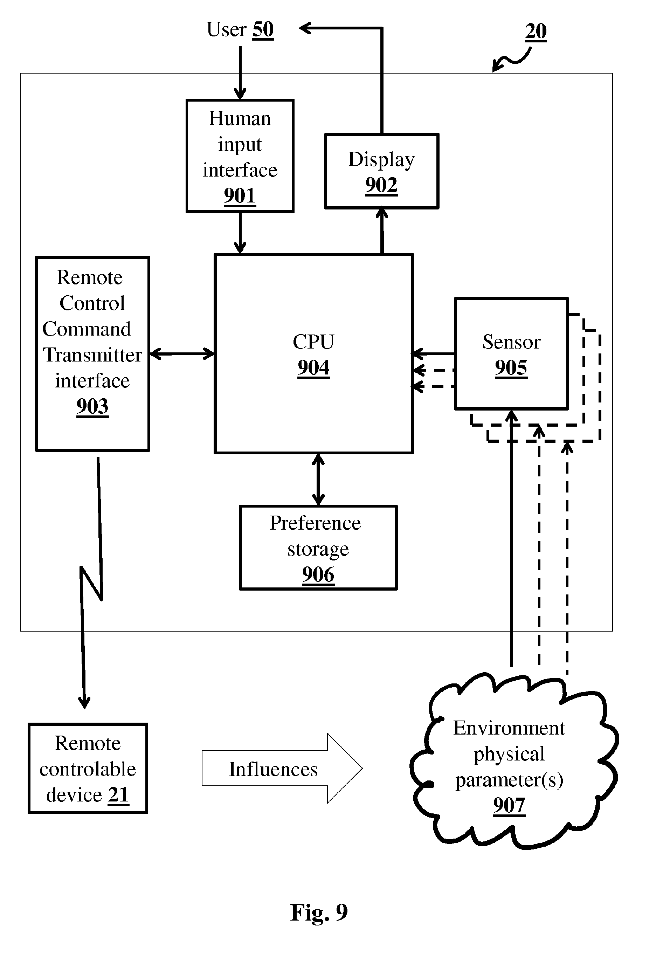

**Figure 9** is an example remote control device (20) according to the principles of the present disclosure. The device comprises the following components:
A human input interface (901, e.g. keypad or interface for speech control) for entering user input commands; a display (902, e.g. a built-in display) for giving a visual return to the user; a remote control command transmitter interface (903, e.g. infrared transmitter) for transmitting remote control commands to a remote controllable device; one or more sensors (905) that measure one or more environment physical parameter(s) (907); a storage (906, e.g. a flash memory) for storing of one or more user preference values of physical parameter(s); and a processing unit (904) for determining if the at least one value of the at least one physical parameter received from the at least one sensor is according to the preference value(s) stored in the remote control device.

According to a variant embodiment of the example remote control device, the sensor(s) is/are external to the remote control device. According to a variant embodiment of the example remote control device, the display and the human input interface are combined in a single arrangement (e.g. a display with touch sensitive pad). According to a variant embodiment of the example remote control device, it does not comprise a display and/or human input interface; e.g. the remote control device is a watch, memory stick, a smartcard, or electronic key fob, or electronic key. According to a variant embodiment of the example remote device, the remote control device comprises a transmitter/receiver interface for communication with the remote controllable device (e.g. a Bluetooth transmitter/receiver interface or Near Field Communication (NFC) arrangement), which can be used to transmit remote control commands to the remote controllable device.

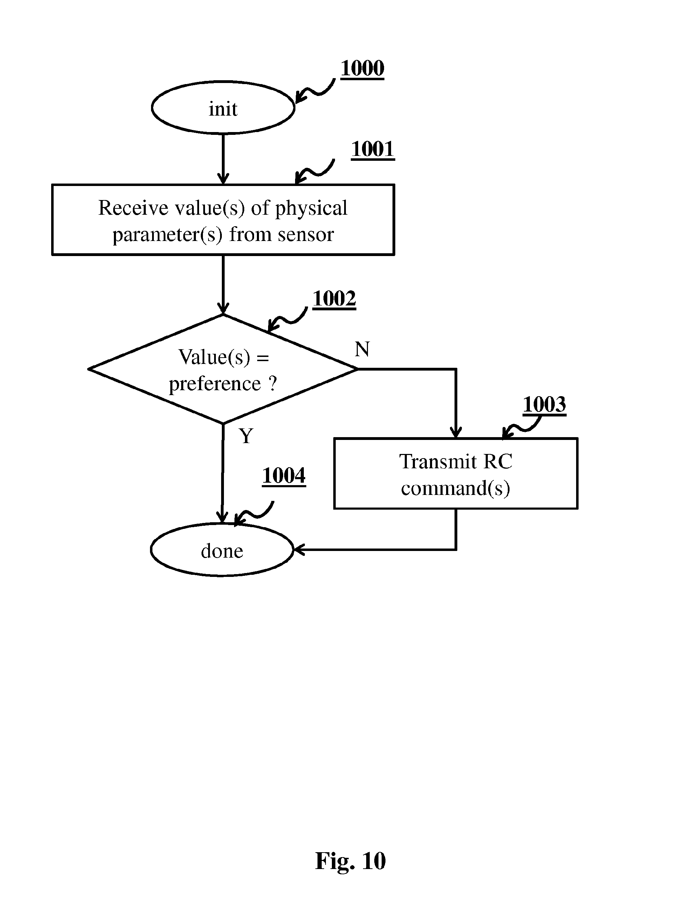

**Figure 10** is a flow chart of an advantageous embodiment of a method according to the present principles, implemented for example by device 20 of figure 9. In a first step (1000), different variables and memory zones that are used in the method are initialized. In a step 1001, at least one value of at least one physical parameter corresponding to a remote configurable feature of the device is received from at least one sensor; e.g. the at least one physical parameter corresponds to sound, and the at least one value of the at least one physical parameter corresponds to 10dB. In a step 1002, the at least one value of the at least one physical parameter received from the at least one sensor is compared to at least one user preference value stored in the device. The at least one user preference value stored corresponds for example to 44dB. If the at least one value is according to the stored at least one preference value, the method ends with step 1004. If not, at least one remote control command is transmitted to the remote controllable device, for configuring the at least one remote controllable feature of the second device according to the user preferences. The at least one remote control command corresponds for example to a remote control command for increasing the audio volume level of the remote controllable device.

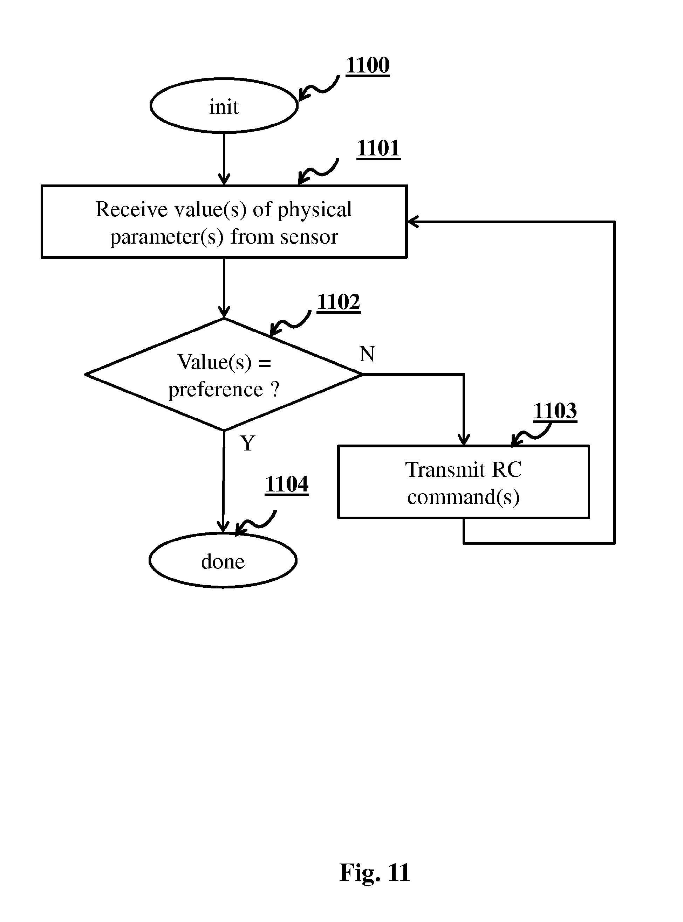

**Figure 11** is a flow chart of a further advantageous variant embodiment of a method according to the present principles, implemented for example by device 20 of figure 9. In a first step (1100), different variables and memory zones that are used in the method are initialized. The figure further illustrates the feature of iterating the steps (1101, 1102) of the method until it is determined that at least one value of at least one physical parameter is according to at least one user preference stored in the device; after transmitting the RC command, in step 1103, the method returns to step 1101. If the at least one value is according to the at least one user preference, the method ends with step 1104.

Some elements in the drawings may not be used or be necessary in all embodiments.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A method of remote configuration, by a first device (20), of at least one remote controllable feature of a second device (21, 401-405, 412-414) according to user preferences, said method being **characterized in that** it comprises:
receiving (1001), from at least one sensor, at least one value of at least one physical parameter corresponding to a remote controllable feature of said second device;
if said at least one value of said at least one physical parameter received from said at least one sensor is not according to at least one user preference value stored in said first device, transmitting (504, 1003) at least one remote control command to said second device for configuring said at least one remote controllable feature of said second device according to said user preferences.

2. The method according to Claim 1, wherein said method further comprises iterating the steps of the method until said at least one value of said at least one physical parameter is according to said at least one user preference value stored in said first device.

3. The method according to Claim 1 or 2, further comprising receiving from said second device a set of remote controllable features and associated remote control commands for adjusting said remote controllable features.

4. The method according to any of Claims 1 to 3, further comprising recording of a value of at least one physical parameter, received from said at least one sensor, in a memory of said first device for storing said at least one user preference value.

5. The method according to any of Claims 1 to 4, wherein said at least one sensor comprises a microphone, said at least one physical parameter comprises sound, and said at least one remote controllable feature comprises an audio volume level.

6. The method according to Claim 5, wherein said at least one remote control command transmitted in said transmitting step comprises a remote control command for adjusting said audio volume level.

7. The method according to any of Claims 1 to 6 wherein said at least one sensor comprises a light sensor, said at least one physical parameter comprises light, and said at least one remote controllable feature comprises a display brightness level.

8. The method according to Claim 7, wherein said at least one remote control command transmitted in said transmitting step comprises a remote control command for adjusting said display brightness level.

9. The method according to any of Claims 1 to 8, wherein said at least one sensor comprises a color sensor, said at least one physical parameter comprises color, and said at least one remote controllable feature comprises a display color setting.

10. The method according to Claim 9, wherein said at least one remote control command transmitted in said transmitting step comprises a remote control command for adjusting said display color setting.

11. An apparatus (20) for remote configuring of at least one remote controllable feature of a remote controllable device (21) according to user preferences, the apparatus being **characterized in that** it comprises:
a processing unit (904);
at least one sensor (905), operably coupled to said processing unit, configured to measure at least one value of at least one physical parameter corresponding to a remote controllable feature of the remote controllable device;
a memory (906), operably coupled to said processing unit, configured to store at least one user preference value of said at least one physical parameter;
said processing unit (904) being configured to determine that said at least one value of said at least one physical parameter received from said at least one sensor is not according to said at least one user preference value stored in said memory; and
a remote control command transmitter (903) configured to transmit at least one remote control command to said remote controllable device for configuring said at least one remote controllable feature of said remote controllable device according to said at least one user preferences.

12. The apparatus according to Claim 11, wherein said processing unit is further configured to iterate said determining and said transmitting until said value of said at least one physical parameter is according to said at least one user preference value stored in said memory.

13. The method according to Claim 11 or 12, further comprising a receiver interface operably configured to receive from said remote controllable device a set of remote controllable features and associated remote control commands for adjusting said remote controllable features.

14. The method according to any of Claims 11 to 13, wherein said at least one sensor comprises a microphone said at least one physical parameter comprises sound, and said at least one remote controllable feature comprises an audio volume level.

15. The method according to any of Claims 11 to 14 wherein said at least one sensor comprises a light sensor, said at least one physical parameter comprises light, and said at least one remote controllable feature comprises a display brightness level.
